# EUROPÄISCHE PATENTSCHRIFT

(11) **EP 3 763 638 B1**
(45) Veröffentlichungstag und Bekanntmachung des Hinweises auf die Patenterteilung: **20.05.2026**
(21) Anmeldenummer: 20184741.5
(22) Anmeldetag: 08.07.2020
(51) Int. Cl.: B65G 1/00, B21D 43/22

(54) **JUSTIERSYSTEM MIT EINER JUSTIERVORRICHTUNG ZUM AUSRICHTEN VON WERKSTÜCKEN**
ADJUSTING SYSTEM WITH AN ADJUSTING DEVICE FOR ALIGNING WORKPIECES
SYSTÈME D'AJUSTEMENT DOTÉ D'UN DISPOSITIF D'AJUSTEMENT PERMETTANT D'ALIGNER DES PIÈCES

(30) Priorität: 12.07.2019 DE 102019004849
(43) Veröffentlichungstag der Anmeldung: 13.01.2021
(73) Patentinhaber: STOPA Anlagenbau GmbH, 77855 Achern-Gamshurst (DE)
(72) Erfinder: Nicolai, Felix, 77652 Offenburg (DE); Zimper, Daniel, 77654 Offenburg (DE)
(74) Vertreter: Lichti - Patentanwälte Partnerschaft mbB

(56) Entgegenhaltungen:
- DE-A1- 102016 110 542
- FR-A1- 2 973 018
- JP-B1- S5 029 230
- US-A- 4 195 963

## Beschreibung

Die Erfindung betrifft ein Justiersystem mit einer Justiervorrichtung zum Ausrichten von Werkstücken, insbesondere Blechstapeln, relativ zu einer Palette, mit einer Mehrzahl an Tragstäben, auf welchen die Werkstücke ablegbar sind, wobei die Tragstäbe mit einem Positioniergestell verbunden sind.

Das Dokument FR 2 973 018 A1 offenbart eine Vorrichtung nach dem Oberbegriff des Anspruchs 1.

Insbesondere zwecks einer Lagerung und/oder Bearbeitung von Werkstücken ist es häufig erforderlich, die Werkstücke in einer exakten Relativposition in Bezug auf eine Palette zu justieren und sie sodann in der vorgegebenen Relativposition auf der Palette abzulegen, wonach sie mittels der Palette in einem Lager, z.B. einem (Hoch)regallager oder dergleichen, auf Vorrat zu halten oder direkt einer weiteren Bearbeitung, z.B. mittels einer Werkzeugmaschine, zuzuführen sind. Hierbei ist grundsätzlich dafür Sorge zu tragen, dass die Werkstücke, insbesondere aufgrund mechanischer Einwirkung, nicht beschädigt oder auch nur zerkratzt werden. Bei den Werkstücken kann es sich um einzelne, in der Regel relativ großformatige und/oder schwere, Werkstücke oder um Gruppen von Werkstücken handeln, wobei sich insbesondere die Handhabung von üblicherweise in Stapeln angelieferten Blechen einerseits aufgrund ihrer großen Abmessungen und ihres hohen Gewichtes, andererseits aufgrund einer sehr leichten mechanischen Beschädigung derselben unter Bildung von Kratzern, Dellen etc., wenn diese beispielsweise in einem Blechstapel relativ zueinander verschoben werden, als schwierig erweist.

Üblicherweise werden solche zur Einlagerung und/oder Bearbeitung angelieferten Werkstücke einschließlich Blechstapeln zunächst, z.B. mittels eines Gabelstaplers, Krans oder anderen bekannten Handhabungseinrichtungen, in einer nicht exakt der vorgesehenen Position entsprechenden Relativposition in Bezug auf die Palette auf letzterer abgelegt, welche als Träger für die Werkstücke dient. Dies ist dadurch bedingt, dass es mittels der vorgenannten Handhabungseinrichtungen mit vertretbarem Aufwand praktisch nicht möglich ist, die Werkstücke "nach Augenmaß" in der exakt vorgesehenen Position auf der Palette abzulegen. Aus diesem Grund können Anschlagelemente vorgesehen sein, mit denen das Werkstück bei seiner Ausrichtung in mechanische Anlage gebracht werden soll. Aufgrund des enormen Gewichts des Werkstücks werden dabei die Anschlagelemente nach wenigen Ausrichtungsvorgängen zerstört und müssen ausgetauscht werden. Die Werkstücke können im Rahmen ihrer Ausrichtung ebenfalls beschädigt werden, so dass die bekannten Anschlagelemente keine sichere Ausrichtung des Werkstücks gewährleisten. Ferner besteht im Falle eines Verrückens der bereits auf der Palette abgelegten Werkstücke die Gefahr einer zumindest oberflächigen, mechanischen Beschädigung derselben infolge der entstehenden Reibung, wobei im Falle von Blechstapeln hinzukommt, dass auch eine Relativverlagerung einzelner Bleche gegenüber benachbarten Blechen in Beschädigungen resultiert. Zudem ist eine vornehmlich manuelle Ausrichtung der Werkstücke auf der Palette aufgrund deren in der Regel beträchtlichen Gewichtes nicht möglich.

Um die Werkstücke zwecks deren weiteren Verwendung in der vorgegebenen, exakten Relativposition auf der Palette abzulegen, sind aus dem Stand der Technik Justiervorrichtungen bekannt, welche ein in Bezug auf die Palette verlagerbares Positioniergestell mit einer Mehrzahl an Tragstäben umfassen, auf welchen die Werkstücke abgelegt werden können, wonach die auf den Tragstäben des Positioniergestells abgelegten Werkstücke durch Verlagerung des Positioniergestells in Bezug auf die Palette in die exakte, vorgegebene Relativposition bezüglich der Palette gebracht und schließlich auf dieser abgelegt werden, indem die Palette relativ zu dem Positioniergestell höhenverlagert wird, so dass die schließlich in der exakten Position auf der Palette befindlichen Werkstücke eingelagert oder weiterbearbeitet werden können. Bei den bekannten Justiervorrichtungen sind Aktuatoren vorgesehen, welche das Positioniergestell mit den Tragstäben und dem hierauf abgelegten Blechstapel bewegen. Bedingt durch die notwendige Lagerung des Positioniergestells mit mehreren Freiheitsgraden, damit es in einer üblicherweise etwa horizontalen Ebene relativ zu der Palette verlagert werden kann, erweisen sich die bekannten Justiervorrichtungen jedoch in konstruktiver Hinsicht als aufwändig und teuer, wobei für die Ausrichtung des Blechstapels nur ein geringes Bewegungsspektrum zur Verfügung steht. Da der Blechstapel bei der Ablage auf die Tragstäbe des Positioniergestells der Justiervorrichtung, was üblicherweise mittels Gabelstaplern geschieht, von der exakt vorgegebenen Ausrichtung in Bezug auf die Palette häufig mehr oder minder stark abweicht, ist die Ausrichtung des mit dem Blechstapel beladenen Positioniergestells gegenüber der Palette oftmals langwierig und wenig zeiteffizient, was auch die Fehleranfälligkeit der bekannten Justiervorrichtungen erhöht.

Der Erfindung liegt daher die Aufgabe zugrunde, den vorgenannten Nachteilen zu begegnen und eine Justiervorrichtung der eingangs genannten Art auf einfache und kostengünstige Weise dahingehend weiterzubilden, dass die Werkstücke einschließlich Blechstapeln einfacher und schneller ausgerichtet werden können. Sie ist ferner auf ein Justiersystem mit einer solchen Justiervorrichtung und wenigstens einer Palette gerichtet.

Erfindungsgemäß wird die Aufgabe durch ein Justiersystem nach Anspruch 1 gelöst. Die Justiervorrichtung des Justiersystems umfasst ein Positioniergestell mit Tragstäben, welches in einer im Wesentlichen horizontalen Ebene verschiebbar, schwimmend auf einem Tragrahmen gelagert ist.

Das Justiersystem umfasst wenigstens eine Palette, auf welche die Werkstücke ablegbar sind, wobei die Palette von den Tragstäben des Positioniergestells durchgreifbare Durchgangsöffnungen aufweist, deren Querschnitt größer ist als der Querschnitt der Tragstäbe.

Die Erfindung basiert auf dem Grundgedanken, dass durch die im Wesentlichen horizontal bewegliche und schwimmende Lagerung des Positioniergestells auf dem Tragrahmen die Möglichkeit gegeben ist, auch sehr schwere, großformatige und leicht zu beschädigende Werkstücke einschließlich Blechstapeln auf dem direkten Weg in die exakt gewünschte Ausrichtung in Bezug auf die Palette zu bringen, ohne dass das Bewegungsspektrum durch eine aufwändige Lagerung des Positioniergestells mit fest vorgegebenen Freiheitsgraden eingeschränkt ist. Die Ausrichtung des Blechstapels mittels des relativ zu dem Tragrahmen verlagerbaren Positioniergestells mit den Tragstäben der erfindungsgemäßen Justiervorrichtung vollzieht sich daher bei einem konstruktiv einfachen, robusten und verhältnismäßig kostengünstigen Aufbau einfacher und schneller, was auch die Fehleranfälligkeit reduziert. Hierbei ist das Positioniergestell aufgrund seiner schwimmenden Lagerung auf dem Tragrahmen in beliebige Raumrichtungen entlang der etwa horizontalen Ebene verlagerbar, wobei es sowohl in beliebige Raumrichtungen in dieser Horizontalebene translatorisch verlagerbar als auch um beliebige vertikale Achsen drehbar ist. Aufgrund der schwimmenden Lagerung des Positioniergestells werden jegliche Relativbewegungen der auf dessen Tragstäben aufgenommenen Werkstücke relativ zu den Tragstäben vermieden, so dass Beschädigungen der Werkstücke bei der exakten Ausrichtung vermieden werden und auch schwer handhabbare Werkstückgruppen, wie insbesondere Blechstapel, schnell und schadensfrei justiert werden können.

Das erfindungsgemäße Justiersystem macht es aufgrund der Durchgangsöffnungen der Palette mit großem Querschnitt, welche während des Ausrichtens von Werkstücken - oder genauer: während der Relativverlagerung von auf den Tragstäben des Positioniergestells aufgenommenen Werkstücken relativ zu dem Tragrahmen - einen Durchgriff der Tragstäbe mit demgegenüber kleinen Querschnitt erlauben, möglich, dass die Palette ebenso wie der insbesondere stationär angeordnete Tragrahmen stationär gehalten wird, während das Positioniergestell mit seinen die Durchgangsöffnungen der Palette durchgreifenden Tragstäben relativ zu dem Tragrahmen und der Palette bewegt wird. Dabei ist der durch den großen Querschnitt der Durchgangsöffnungen der Palette, welche sich beispielsweise im Wesentlichen streifenförmig in Längsrichtung der Palette, aber auch in beliebiger anderer Anordnung erstrecken können, zur Verfügung gestellte Zwischenraum vollständig zur Verlagerung des Positioniergestells in Bezug die Palette nutzbar. Sobald das oder die Werkstück(e) auf diese Weise justiert worden ist bzw. sind, können die Werkstücke z.B. einfach und schnell auf der Palette abgelegt werden, indem das Positioniergestell mit den Tragstäben so lange in Bezug auf die Palette abgesenkt wird, bis die Tragstäbe außer Eingriff mit den Durchgangsöffnungen der Palette und die Werkstücke folglich mit der Palette in Kontakt gelangen.

Das Positioniergestell kann vorzugsweise im Wesentlichen gleitreibungsfrei auf dem Tragrahmen gelagert sein, um das häufig enorme Gewicht der Werkstücke einschließlich Blechstapeln bei der Ausrichtung zu kompensieren und eine hohe Energieeffizienz zu gewährleisten. Indem etwaige Gleitreibungskräfte durch die gleitreibungsfreie Lagerung des Positioniergestells auf dem Tragrahmen im Wesentlichen eliminiert werden, ist eine sehr einfache und schnelle Ausrichtung des Blechstapels unter geringem Kraftaufwand möglich, was die Fehleranfälligkeit weiter reduziert. Darüber hinaus macht der hierdurch bedingte, nur geringe Lagerwiderstand auch eine manuelle Ausrichtung des Blechstapels möglich.

Gemäß einer vorteilhaften Ausführungsvariante kann vorgesehen sein, dass das Positioniergestell auf einer Mehrzahl an Kugelrollen des Tragrahmens aufliegt. Dies ermöglicht eine besonders einfache Umsetzung der schwimmenden Lagerung, die in diesem Fall lediglich einen allenfalls geringen Rollreibungswiderstand besitzt. Die Kugelrollen können dabei beispielsweise an der dem Positioniergestell zugewandten Seite des Tragrahmens oder auch an der letzterem zugewandten Seite des Positioniergestells angeordnet sein.

Gemäß einer weiteren vorteilhaften Ausführungsvariante kann vorgesehen sein, dass das Positioniergestell auf einem zwischen dem Positioniergestell und dem Tragrahmen angeordneten Fluidpolster aufliegen. Das Fluidpolster kann beispielsweise eine unter Druck gehaltene Flüssigkeit umfassen, wie beispielsweise Wasser oder dergleichen, aber auch Gele, oder es kann sich um ein unter Druck stehendes Gaspolster, z.B. in Form eines Luftpolsters, handeln. Darüber hinaus ist beispielsweise auch eine schwebende Lagerung des Positioniergestells auf dem Tragrahmen mittels Elektromagneten denkbar.

Alternativ oder zusätzlich zu einer manuellen Ausrichtbarkeit des Positioniergestells in Bezug auf den Tragrahmen kann in vorteilhafter Ausgestaltung vorgesehen sein, dass wenigstens ein Aktuator derart mit dem Tragrahmen verbunden ist, dass das Positioniergestell mittels des Aktuators relativ zum Tragrahmen bewegbar ist. Durch derartige Aktuatoren lassen sich die Bewegungen des Positioniergestells relativ zum Tragrahmen exakt steuern, wobei der Aktuator beispielsweise manuell oder motorisch betätigbar und insbesondere fernsteuerbar sein kann. Bei einem solchen Aktuator kann es sich vorzugsweise um einen Linearaktuator, insbesondere in Form einer hydraulischen, pneumatischen, hydropneumatischen oder elektrischen Kolben-/Zylindereinheit handeln, wie sie als solche aus dem Stand der Technik bekannt ist.

In vorteilhafter Ausgestaltung sind wenigstens zwei solcher Aktuatoren vorgesehen, welche verschiedene, nicht parallele Wirkungsrichtungen aufweisen, welche zweckmäßigerweise im Wesentlichen senkrecht zueinander angeordnet sind, um für Verlagerungen des Positioniergestells sowohl in x- als auch in y-Richtung in der Horizontalebene zu sorgen.

In diesem Zusammenhang können vorzugsweise auch wenigstens drei, z.B. genau drei, Aktuatoren vorgesehen sein, wobei insbesondere zwei Aktuatoren im Wesentlichen zueinander parallele Wirkungsrichtungen aufweisen, während wenigstens ein weiterer Aktuator eine demgegenüber verschiedene, nicht parallele, z.B. wiederum im Wesentlichen senkrecht hierzu angeordnete, Wirkungsrichtung aufweist. Auf diese Weise lassen sich auch schnelle Drehungen des Positioniergestells in Bezug auf den Tragrahmen um praktisch beliebige vertikale Drehachsen durchführen.

Um eine im Wesentlichen vertikale Bewegung des Positioniergestells in Bezug auf eine Palette und auf diese Weise eine einfache Überführung von auf deren Tragstäben abgelegten Werkstücken auf die Palette zu ermöglichen, wie es weiter oben beschrieben ist, kann zweckmäßigerweise eine Hubeinrichtung vorgesehen sein, mittels welcher der Tragrahmen gemeinsam mit dem Positioniergestell relativ zur Palette anhebbar und absenkbar ist. Die Hubeinrichtung kann beispielsweise als Scherenhubtisch, welcher den Tragrahmen trägt, oder in beliebiger anderer bekannter Weise ausgestaltet sein.

Zur Beschränkung der Bewegung des Positioniergestells in Bezug auf den Tragrahmen kann wenigstens ein Anschlag vorgesehen sein, wobei ein solcher Anschlag beispielsweise als mechanischer Anschlag und/oder insbesondere als berührungsfreier Anschlag, z.B. in Form einer Lichtschranke oder anderer berührungsfreier Sensoren, ausgestaltet sein kann, mittels welcher ein Signal ausgebbar ist, wenn das Positioniergestell die Lichtschranke unterbricht und eine vordefinierte Position überschreitet.

Eine Weiterentwicklung der Erfindung kann ferner eine optische Bilderkennungseinrichtung vorsehen, mittels welcher die jeweilige Position des Positioniergestells und/oder dessen Tragstäbe und/oder des abgelegten Werkstücks des Blechstapels erfassbar sind und mittels welcher vorzugsweise auch Informationen an den Werkstücken, beispielsweise in Form eines maschinenlesbaren Codes, wie eines QR-, Data-Matrix-, Strichcodes oder dergleichen, erfassbar sind.

Darüber hinaus kann vorzugsweise wenigstens eine Steuereinheit vorgesehen sein, mittels welcher das Positioniergestell automatisch in Bezug auf den Tragrahmen bewegbar ist, wie insbesondere in Abhängigkeit von der erfassten Information einer Bilderkennungseinrichtung der vorgenannten Art.

Dem Positioniergestell mit den Tragstäben und dem Tragrahmen der Justiervorrichtung kann zweckmäßigerweise ein Traggestell zugeordnet sein, auf welchem die Palette ablegbar ist. Das Traggestell mit der hierauf abgelegten Palette kann dabei stationär sein, wobei der Tragrahmen, das Positioniergestell und dessen Tragstäbe unterhalb der Palette angeordnet sind, wenn diese auf dem Traggestell abgelegt worden ist, d.h. die hierzu dienenden Auflager des Traggestells befinden sich insbesondere auf einem Niveau oberhalb des Tragrahmens und des hierauf schwimmend gelagerten Positioniergestells. In einer vorteilhaften Ausgestaltung der Erfindung ist das Traggestell relativ zum Boden beweglich, um für eine größere Bewegungsfreiheit der Justiervorrichtung zu sorgen. Dabei kann das Traggestell vorzugsweise auf Rädern gegenüber dem Boden abgestützt sein, wobei es auf Schienen geführt oder gesteuert bzw. automatisch, insbesondere auch autonom, bewegbar sein kann. Das Traggestell kann hierzu mit einem Wagen mit Rädern verbunden sein. Mit Hilfe des beweglichen Wagens ist das auf die Justiervorrichtung aufgelegte Werkstück nach dessen Ausrichtung besonders effizient seinem gewünschten Zielort zuführbar.

Wie bereits angedeutet, umfasst das erfindungsgemäße Justiersystem ferner vorzugsweise eine Hubeinrichtung, welche zum Anheben und Absenken des Tragrahmens gemeinsam mit dem Positioniergestell relativ zu dem Traggestell bzw. einer hierauf abgelegten Palette ausgebildet ist. Nachdem die Werkstücke durch Bewegung des Positioniergestells mit den Tragstäben in horizontaler Ebene relativ zu der stationär auf dem Traggestell abgelegten Palette in ihre gewünschte Position in Bezug auf die Palette überführt worden sind, können die Werkstücke folglich mittels der Hubeinrichtung, welche das Positioniergestell gemeinsam mit dem schwimmend lagernden Tragrahmen gegenüber der Palette absenkt, bis die Tragstäbe außer Eingriff mit den Durchgangsöffnungen der Palette gelangen, auf die Palette abgelegt werden.

Weitere Merkmale und Vorteile der Erfindung ergeben sich aus der nachfolgenden Beschreibung von Ausführungsbeispielen der Erfindung unter Bezugnahme auf die Zeichnungen. Dabei zeigen:
- Fig. 1: eine perspektivische Ansicht einer Ausführungsform einer Justiervorrichtung mit einem Tragrahmen und einem hierauf gelagerten Positioniergestell, auf dessen Tragstäben ein Blechstapel mittels eines Gabelstaplers abgelegt worden ist;
- Fig. 2: die Justiervorrichtung gemäß Fig. 1 in Explosionsdarstellung;
- Fig. 3: eine schematische Detailansicht einer Kugelrolle des Tragrahmens;
- Fig. 4: eine Explosionsdarstellung der Justiervorrichtung gemäß Fig. 1 bis 3 in einer Ansicht von schräg unten;
- Fig. 5: die Justiervorrichtung in zusammengebautem Zustand von unten betrachtet;
- Fig. 6: die Justiervorrichtung mit einer Hubeinrichtung und einem Traggestell in Seitenansicht; und
- Fig. 7: die Justiervorrichtung gemäß Fig. 6 mit einer Palette.

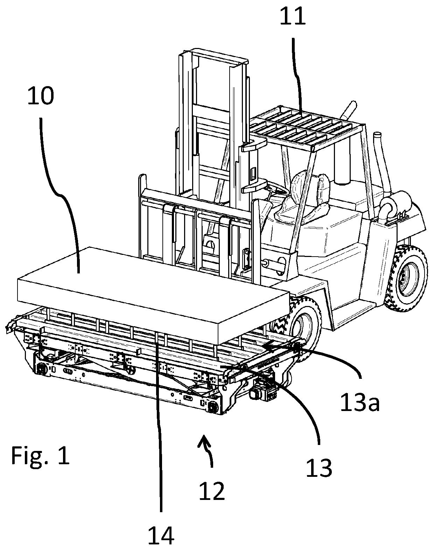

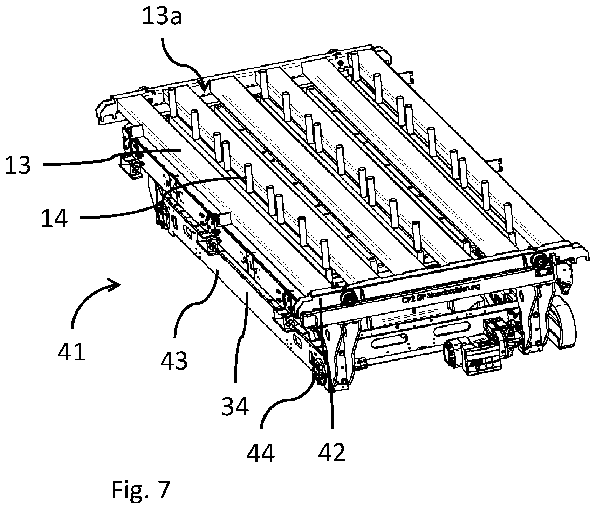

In der Fig. 1 ist ein als Quader skizzierter Blechstapel 10 aus mehreren Einzelblechen schematisch wiedergegeben, welcher von einem Gabelstapler 11 an eine Ausführungsform einer Justiervorrichtung 12 eines erfindungsgemäßen Justiersystems 41 überführt worden ist, um den Blechstapel 10 in eine vordefinierte Relativposition zu einer Palette 13 auszurichten und auf dieser abzulegen. Der Blechstapel 10 wird dabei zunächst auf Tragstäbe 14 der Justiervorrichtung 12 abgelegt, wobei die Tragstäbe 14 - hier im Wesentlichen sich streifenförmig in Längsrichtung erstreckende - Durchgangsöffnungen 13a der Palette 13 von unten durchgreifen, wie es insbesondere auch aus der Fig. 7 ersichtlich ist. Die Tragstäbe 14 sind im Wesentlichen starr an einem in der Fig. 1 nicht erkennbaren Positioniergestell festgelegt, welches relativ zu der Palette 13 beweglich ist, so dass der Blechstapel 10 in gewünschter Weise in Bezug auf die Palette 13 ausgerichtet werden kann.

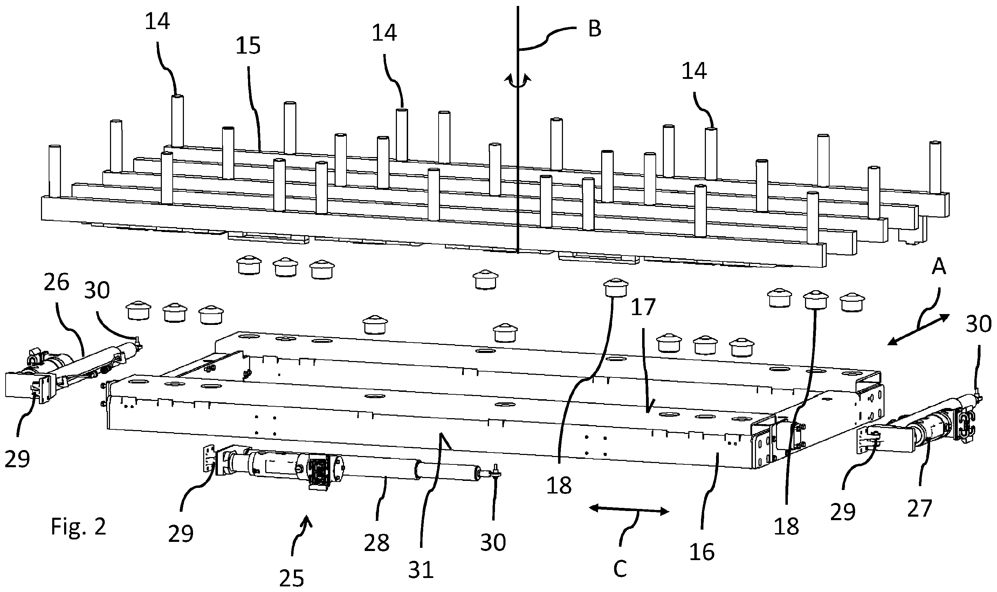

Die Fig. 2 zeigt eine Explosionsdarstellung der Justiervorrichtung 12 der Fig. 1. Wie bereits erwähnt, sind die Tragstäbe 14 mit dem Positioniergestell 15 verbunden, wobei das Positioniergestell 15 auf einem Tragrahmen 16 schwimmend gelagert und demgegenüber in einer Horizontalebene verlagerbar ist. Der Tragrahmen 16 weist an seiner dem Positioniergestell 15 zugewandten Oberseite 17 mehrere Kugelrollen 18 auf, auf welchen sich das Positioniergestell 15 zwecks seiner schwimmenden und gleitreibungsfreien Lagerung abstützt, so dass das Positioniergestell 15 - einschließlich des dort aufgelegten und in Fig. 2 nicht nochmals dargestellten Blechstapels 10 - in der horizontalen Ebene sowohl translatorisch als auch um vertikale Achsen drehbar verlagerbar ist, wenn der Blechstapel 10 mit seinem hohen Gewicht auf den Tragstäben 14 des Positioniergestells 15 aufliegt.

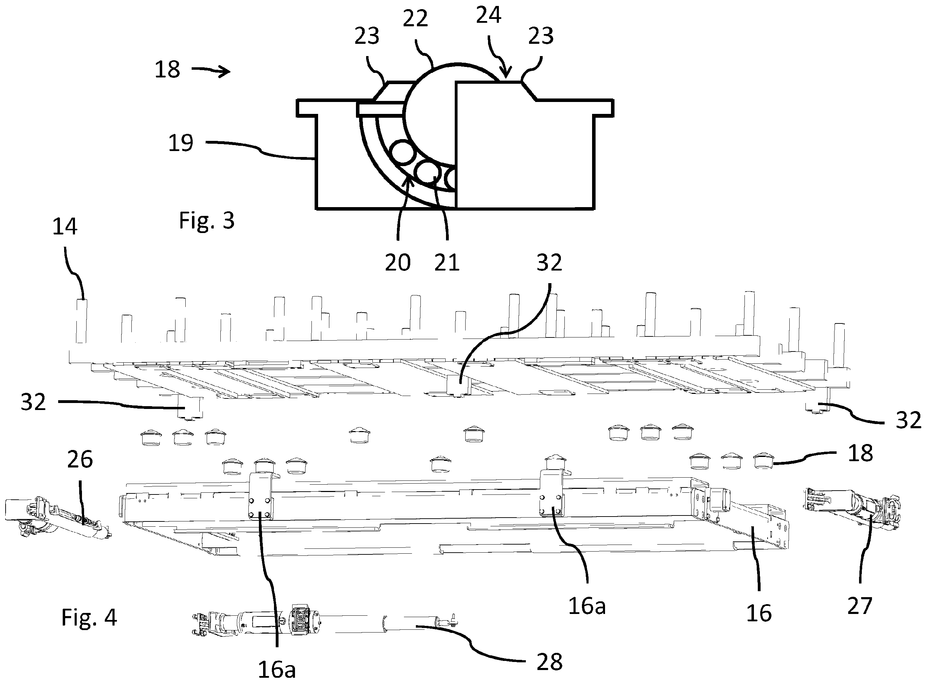

In der Fig. 3 ist eine der Kugelrollen 18 der Fig. 2 mit teilweise ausgeschnittenem Gehäuse 19 schematisch wiedergegeben. In dem Gehäuse 19 sind in einer halbkugelschalenförmigen Ausnehmung 20 kleine Kugeln 21 angeordnet, welche in unmittelbarem Kontakt zu einer großen, in der Ausnehmung 20 zentriert angeordneten Kugel 22 stehen. Die große Kugel 22 ist durch einen Deckel 23 des Gehäuses 19 unverlierbar in der Ausnehmung 20 gehalten, wobei die Kugel 22 eine kreisförmige Ausnehmung 24 des Deckels 23 teilweise durchgreift. In montiertem Zustand der Justiervorrichtung 12 liegt das Positioniergestell 15 auf den großen Kugeln 22 der Kugelrollen 18 auf, welche mittels der kleinen Rollen 21 in einem jeweiligen Gehäuse 19 der Kugelrollen 18 gelagert sind. Auf diese Weise ergibt sich eine gleitreibungsfreie, schwimmende Lagerung des Positioniergestells 15 auf dem Tragrahmen 16 mittels der Kugelrollen 18, welche allenfalls einer geringen Rollreibung unterliegt.

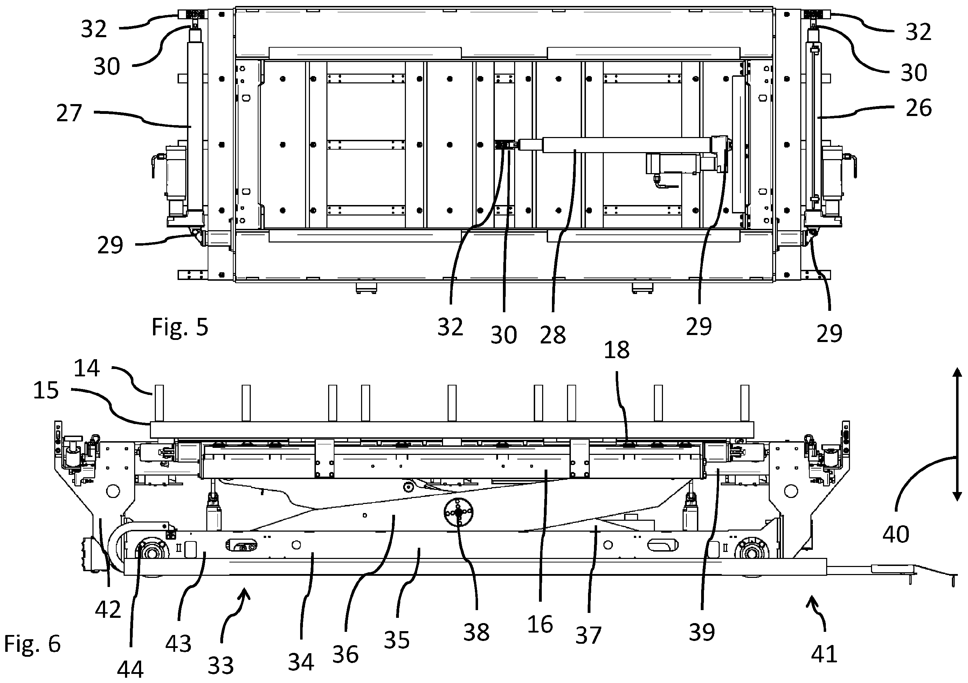

In der Explosionsdarstellung der Fig. 2 sind ferner drei Aktuatoren 25 in Form von Linearzylindern 26, 27, 28 erkennbar, welche einerseits an dem Tragrahmen 16 angelenkt sind, indem sie hiermit mittels Gelenken 29 verbunden sind. Andererseits stehen die Linearzylinder 26, 27, 28 mittels weiteren Gelenken 30 mit dem Positioniergestell 15 in Verbindung, um infolge Längenveränderung eines jeweiligen Linearzylinders 26, 27, 28 das Positioniergestell 15 in Bezug auf den Tragrahmen 16 verschieben zu können. Beim vorliegenden Ausführungsbeispiel sind zwei Linearzylinder 26, 27 jeweils an einander gegenüberliegenden Seiten - hier der Querseiten - des Tragrahmens 16 angeordnet und besitzen zueinander parallele Wirkungsrichtungen. Der dritte Linearzylinder 28 ist unterhalb des Tragrahmens 16 angeordnet (vgl. insbesondere die Fig. 5) und weist eine zu den beiden anderen Linearzylindern 26, 27 etwa senkrechte Wirkungsrichtung auf, wobei sich die Wirkungsrichtungen aller Aktuatoren 26, 27, 28 in der horizontalen Ebene befinden, welche sich parallel zu der Palette 13 erstreckt.

Mittels der jeweils aus Kolben-/Zylindereinheiten gebildeten Linearzylinder 26, 27, 28 sind beliebige translatorische Bewegungen des Positioniergestells 15 in der horizontalen Ebene einschließlich Drehungen des Positioniergestells 15 um eine veränderliche vertikale Achse relativ zu dem Tragrahmen 16 möglich. So wird im Falle einer gemeinsamen, synchronen Auslenkung der beiden parallelen Linearzylinder 26, 27 das Positioniergestell 15 translatorisch entlang einer ersten horizontalen Bewegungsrichtung A bewegt. Bewegen sich die Linearzylinder 26, 27 gegenläufig, aber mit gleich großen Geschwindigkeiten, so wird das Positioniergestell 15 um eine vertikale Achse B gedreht, welche sich etwa mittig des Positioniergestells 15 erstreckt. Bewegt sich nur einer der Linearzylinder 26, 27 oder bewegen sich beide Linearzylinder 26, 27, aber mit unterschiedlichen Geschwindigkeiten, so wird das Positioniergestell 15 um eine andere vertikale Achse (nicht gezeigt) gedreht. Im Falle einer Bewegung des Linearzylinders 28 wird das Positioniergestell 15 translatorisch entlang einer zu der ersten Bewegungsrichtung A senkrechten, zweiten horizontalen Bewegungsrichtung C bewegt, etc. Aufgrund der gelenkigen Verbindungen der Linearzylinder 26, 27, 28 einerseits mit dem Tragrahmen 16, andererseits mit dem Positioniergestell 15 können die Linearzylinder 26, 27, 28 beliebigen Relativbewegungen des Positioniergestells 15 in Bezug auf den Tragrahmen 16 folgen. Die Linearzylinder 26, 27, 28 können dabei manuell und/oder mittels nicht gezeigten Steuervorrichtungen ansteuerbar sein.

Die Fig. 4 zeigt die Justiervorrichtung 12 der Fig. 2 in einer Ansicht von schräg unten. Aus dieser Ansicht ist ersichtlich, dass sämtliche Linearzylinder 26, 27, 28 z.B. jeweils mit einem nach unten vorstehenden Zapfen 32 des Positioniergestells 15 derart gelenkig verbunden sind, dass die Zapfen 32 die Bewegungen der Linearzylinder 26, 27, 28 auf das Positioniergestell 15 übertragen und dieses in vorstehend beschriebener Weise auslenken. Ferner zeigt Fig. 4 zwei Winkelelemente 16a, die mit einer langen Seitenfläche des rechteckigen Tragrahmens 16 befestigt sind und den Tragrahmen 16 übergreifen. Die Winkelelemente 16a sind aus Übersichtsgründen in Fig. 2 nicht gezeigt.

In der Fig. 5 ist die Justiervorrichtung 12 in zusammengebautem Zustand in einer Ansicht von unten dargestellt, aus welcher die Verbindungen der Linearzylinder 26, 27, 28 mit dem Tragrahmen 16 mittels der Gelenke 29 und die gleichfalls gelenkigen Verbindungen der Linearzylinder 26, 27, 28 mit dem Positioniergestell 15 mittels der Gelenke 30 und der Zapfen 32 ersichtlich sind. Ferner ist die Anordnung des dritten Linearzylinders 28 unterhalb des Tragrahmens 16 erkennbar.

Wie aus der Fig. 6 ersichtlich, ist die Justiervorrichtung 12 zweckmäßigerweise mit einer Hubeinrichtung 33 versehen, welche beim vorliegenden Ausführungsbeispiel als hydraulisch betätigbarer Scherenhubtisch 34 ausgestaltet ist. Der Scherenhubtisch 34 ist mit einem unteren Gestell 35 auf einem nicht gezeigten Untergrund abgestützt. Zwei sich kreuzweise erstreckende, gleichlange Schenkel 36, 37 sind derart beweglich mit dem Gestell 35 verbunden, dass sich die Schenkel 36, 37 um ein Gelenk 38 als gemeinsame Drehachse bewegen können. Im oberen Bereich des Scherenhubtisches 34 sind die Schenkel 36, 37 mit einem Auflager 39 verbunden, das den Tragrahmen 16 der Justiervorrichtung 12 aufnimmt. Durch die Bewegung der Schenkel 36, 37 kann das Auflager 39 und folglich die Justiervorrichtung 12 mit ihrem Tragrahmen 16 und dem hierauf schwimmend gelagerten Positioniergestell 15 in vertikaler Richtung 40 angehoben und abgesenkt werden. Auf diese Weise kann die Justiervorrichtung 12 zunächst unterhalb einer in Fig. 6 nicht gezeigten Palette 13 angeordnet und mittels der Hubeinrichtung 33 einerseits derart angehoben, dass die Tragstäbe 14 des Positioniergestells 15 die Durchgangsöffnungen 13a der Palette 13 nach oben durchgreifen (es können nun Werkstücke auf die Tragstäbe 14 aufgelegt werden, um sie zu justieren), andererseits derart abgesenkt werden, dass die Tragstäbe 14 des Positioniergestells 15 nach unten aus den Durchgangsöffnungen 13a der Palette 13 ausgezogen werden (es können die justierten Werkstücke nun auf der Palette 13 abgelegt werden), wie dies bereits weiter oben unter Bezugnahme auf die Fig. 1 erläutert ist.

Dem Positioniergestell 15 gemäß der Fig. 6 ist ein rahmenartiges Traggestell 42 zugeordnet, und auf welchem eine in der Fig. 6 nicht dargestellte Palette 13 abgelegt werden kann. Die Palette 13 ist in dieser Position derart angeordnet, dass das Positioniergestell 15 mit den Tragstäben 14 - wie vorstehend beschrieben - relativ zu dem stationären Traggestell 42 und folglich auch relativ zu der hierauf abgelegten Palette 13, beweglich ist. Das Traggestell 42 ist mit einem sich im Wesentlich in einer horizontalen Ebene erstreckenden Wagen 43 verbunden, der mittels Rädern 44 an seiner Unterseite gegenüber einem nicht gezeigten Boden abgestützt ist. Durch den Wagen 43 ist das Traggestell 42 - und damit auch die gesamte Justiervorrichtung 12 - entlang des Bodens beweglich, so dass auf der Justiervorrichtung 12 positionierte Werkstücke, z.B. Blechstapel, nach ihrer Ausrichtung ihrem gewünschten Zielort zuführbar sind, wo sie gelagert und/oder weiter verarbeitet werden können.

Die Fig. 7 zeigt schließlich das Justiersystem 41 mit der Justiervorrichtung 12 der Fig. 6 und mit einer Palette 13, welche auf dem stationären Traggestell 42, insbesondere in einer fest vorgegebenen Position, abgelegt worden ist und deren Durchgangsöffnungen 13a von den Tragstäben 14 des Positioniergestells 15 durchgriffen sind, wie dies bereits weiter oben im Einzelnen beschrieben ist.

## Patentansprüche

1. Justiersystem (41) mit einer Justiervorrichtung (12) zum Ausrichten von Werkstücken, insbesondere Blechstapeln (10), relativ zu einer Palette (13), mit einer Mehrzahl an Tragstäben (14), auf welchen die Werkstücke ablegbar sind, wobei die Tragstäbe (14) mit einem Positioniergestell (15) der Justiervorrichtung (12) verbunden sind, wobei das Justiersystem mit wenigstens einer Palette (13) versehen ist, auf welche die Werkstücke ablegbar sind, wobei die Palette (13) von den Tragstäben (14) des Positioniergestells (15) durchgreifbare Durchgangsöffnungen (13a) aufweist, deren Querschnitt größer ist als der Querschnitt der Tragstäbe (14), **dadurch gekennzeichnet, dass** das Positioniergestell (15) mit den Tragstäben (14) in einer im Wesentlichen horizontalen Ebene verschiebbar, schwimmend auf einem Tragrahmen (16) der Justiervorrichtung (12) gelagert ist.

2. Justiersystem nach Anspruch 1, **dadurch gekennzeichnet, dass** das Positioniergestell (15) im Wesentlichen gleitreibungsfrei auf dem Tragrahmen (16) gelagert ist.

3. Justiersystem nach Anspruch 1 oder 2, **dadurch gekennzeichnet, dass** das Positioniergestell (15) auf einer Mehrzahl an Kugelrollen (18) des Tragrahmens (16) aufliegt.

4. Justiersystem nach Anspruch 1 oder 2, **dadurch gekennzeichnet, dass** das Positioniergestell (15) auf einem zwischen dem Positioniergestell (15) und dem Tragrahmen (16) angeordneten Fluidpolster der Justiervorrichtung (12) aufliegt.

5. Justiersystem nach einem der Ansprüche 1 bis 4, **dadurch gekennzeichnet, dass** wenigstens ein Aktuator (25) der Justiervorrichtung (12) derart mit dem Tragrahmen (16) verbunden ist, dass das Positioniergestell (15) mittels des Aktuators (25) relativ zum Tragrahmen (16) bewegbar ist.

6. Justiersystem nach Anspruch 5, **dadurch gekennzeichnet, dass** der Aktuator (25) als Linearaktuator, insbesondere in Form einer Kolben-/Zylindereinheit, ausgebildet ist.

7. Justiersystem nach Anspruch 6 oder 7, **dadurch gekennzeichnet, dass** wenigstens zwei Aktuatoren (25) vorgesehen sind, welche verschiedene, nicht parallele Wirkungsrichtungen aufweisen.

8. Justiersystem nach einem der Ansprüche 5 bis 7, **dadurch gekennzeichnet, dass** wenigstens drei Aktuatoren (25) vorgesehen sind, wobei insbesondere zwei Aktuatoren (25) im Wesentlichen zueinander parallele Wirkungsrichtungen aufweisen, während ein weiterer Aktuator eine demgegenüber verschiedene, nicht parallele Wirkungsrichtung aufweist.

9. Justiersystem nach einem der Ansprüche 1 bis 8, **dadurch gekennzeichnet, dass** eine Hubeinrichtung (33) der Justiervorrichtung (12) vorgesehen ist, mittels welcher der Tragrahmen (16) gemeinsam mit dem Positioniergestell (15) relativ zu der Palette (13) anhebbar und absenkbar ist.

10. Justiersystem nach einem der Ansprüche 1 bis 9, **dadurch gekennzeichnet, dass** wenigstens ein Anschlag zur Beschränkung der Bewegung des Positioniergestells (15) in Bezug auf den Tragrahmen (16) vorgesehen ist.

11. Justiersystem nach einem der Ansprüche 1 bis 10, **dadurch gekennzeichnet, dass** eine optische Bilderkennungseinrichtung der Justiervorrichtung (12) vorgesehen ist, mittels welcher die jeweilige Position des Positioniergestells (15) und/oder dessen Tragstäbe (14) und/oder des abgelegten Werkstücks erfassbar sind.

12. Justiersystem nach einem der Ansprüche 1 bis 11, **dadurch gekennzeichnet, dass** wenigstens eine Steuereinheit der Justiervorrichtung (12) vorgesehen ist, mittels welcher das Positioniergestell (15) automatisch in Bezug auf den Tragrahmen (16) bewegbar ist.

13. Justiersystem nach einem der Ansprüche 1 bis 12, **dadurch gekennzeichnet, dass** dem Positioniergestell (15) mit den Tragstäben (14) und dem Tragrahmen (16) ein Traggestell (42) des Justiersystems (41) zugeordnet ist, auf welchem die Palette (13) ablegbar ist.

14. Justiersystem nach Anspruch 13, **dadurch gekennzeichnet, dass** die Hubeinrichtung (33) zum Anheben und Absenken des Tragrahmens (16) gemeinsam mit dem Positioniergestell (15) relativ zu dem Traggestell (42) ausgebildet ist.

## Claims

1. Adjustment system (41) comprising an adjustment device (12) for aligning workpieces, in particular sheet metal stacks (10), relative to a pallet (13), comprising a plurality of support rods (14) on which the workpieces are placeable, wherein the support rods (14) are connected to a positioning framework (15) of the adjustment device (12), wherein the adjustment system is provided with at least one pallet (13) on which the workpieces are placeable, wherein the pallet (13) has through-openings (13a) of which the cross section is larger than the cross section of the support rods (14) and which are penetrable by the support rods (14) of the positioning framework (15), **characterized in that** the positioning framework (15) with the support rods (14) is mounted floatingly on a support frame (16) of the adjustment device (12) so as to be shiftable in a substantially horizontal plane.

2. Adjustment system according to claim 1, **characterized in that** the positioning framework (15) is mounted on the support frame (16) in a manner substantially free of sliding friction.

3. Adjustment system according to claim 1 or 2, **characterized in that** the positioning framework (15) rests on a plurality of ball rollers (18) of the support frame (16).

4. Adjustment system according to claim 1 or 2, **characterized in that** the positioning framework (15) rests on a fluid cushion, arranged between the positioning framework (15) and the support frame (16), of the adjustment device (12).

5. Adjustment system according to any of claims 1 to 4, **characterized in that** at least one actuator (25) of the adjustment device (12) is connected to the support frame (16) in such a way that the positioning framework (15) is movable relative to the support frame (16) by means of the actuator (25).

6. Adjustment system according to claim 5, **characterized in that** the actuator (25) is designed as a linear actuator, in particular in the form of a piston-cylinder unit.

7. Adjustment system according to claim 6 or 7, **characterized in that** at least two actuators (25) having different, non-parallel directions of action are provided.

8. Adjustment system according to any of claims 5 to 7, **characterized in that** at least three actuators (25) are provided, wherein in particular two actuators (25) have substantially mutually parallel directions of action while a further actuator has a different, non-parallel direction of action in relation thereto.

9. Adjustment system according to any of claims 1 to 8, **characterized in that** a lifting apparatus (33) of the adjustment device (12) is provided, by means of which the support frame (16) together with the positioning framework (15) is raisable and lowerable relative to the pallet (13).

10. Adjustment system according to any of claims 1 to 9, **characterized in that** at least one stop for limiting the movement of the positioning framework (15) in relation to the support frame (16) is provided.

11. Adjustment system according to any of claims 1 to 10, **characterized in that** an optical image recognition apparatus of the adjustment device (12) is provided, by means of which the position of the positioning framework (15) and/or its support rods (14) and/or the placed workpiece can be detected.

12. Adjustment system according to any of claims 1 to 11, **characterized in that** at least one control unit of the adjustment device (12) is provided, by means of which the positioning framework (15) is automatically movable in relation to the support frame (16).

13. Adjustment system according to any of claims 1 to 12, **characterized in that** the positioning framework (15) with the support rods (14) and the support frame (16) is associated with a support framework (42) of the adjustment system (41), on which the pallet (13) is placeable.

14. Adjustment system according to claim 13, **characterized in that** the lifting apparatus (33) is designed to raise and lower the support frame (16) together with the positioning framework (15) relative to the support framework (42).

## Revendications

1. Système d'ajustement (41) comportant un dispositif d'ajustement (12) pour l'alignement de pièces, en particulier d'empilements de tôles (10), par rapport à une palette (13), comportant une pluralité de barres de support (14) sur lesquelles les pièces peuvent être déposées, dans lequel les barres de support (14) sont reliées à un bâti de positionnement (15) du dispositif d'ajustement (12), dans lequel le système d'ajustement est pourvu d'au moins une palette (13) sur laquelle les pièces peuvent être déposées, dans lequel la palette (13) présente des ouvertures de passage (13a) pouvant être traversées par les barres de support (14) du bâti de positionnement (15) et dont la section transversale est plus grande que la section transversale des barres de support (14), **caractérisé en ce que** le bâti de positionnement (15) avec les barres de support (14) est monté de manière flottante sur un cadre de support (16) du dispositif d'ajustement (12), de manière à pouvoir être déplacé dans un plan sensiblement horizontal.

2. Système d'ajustement selon la revendication 1, **caractérisé en ce que** le bâti de positionnement (15) est monté sensiblement sans friction de glissement sur le cadre de support (16).

3. Système d'ajustement selon la revendication 1 ou 2,
**caractérisé en ce que** le bâti de positionnement (15) repose sur une pluralité de galets à billes (18) du cadre de support (16).

4. Système d'ajustement selon la revendication 1 ou 2,
**caractérisé en ce que** le bâti de positionnement (15) repose sur un coussin à fluide du dispositif d'ajustement (12) disposé entre le bâti de positionnement (15) et le cadre de support (16).

5. Système d'ajustement selon l'une des revendications 1 à 4,
**caractérisé en ce qu'**au moins un actionneur (25) du dispositif d'ajustement (12) est relié au cadre de support (16) de telle sorte que le bâti de positionnement (15) est mobile par rapport au cadre de support (16) au moyen de l'actionneur (25).

6. Système d'ajustement selon la revendication 5, **caractérisé en ce que** l'actionneur (25) est conçu comme un actionneur linéaire, en particulier sous la forme d'une unité piston/cylindre.

7. Système d'ajustement selon la revendication 6 ou 7,
**caractérisé en ce qu'**au moins deux actionneurs (25) sont prévus, lesquels présentent des directions d'action différentes, non parallèles.

8. Système d'ajustement selon l'une des revendications 5 à 7,
**caractérisé en ce qu'**au moins trois actionneurs (25) sont prévus, dans lequel en particulier deux actionneurs (25) présentent des directions d'action sensiblement parallèles entre elles, tandis qu'un autre actionneur présente une direction d'action non parallèle, différente des autres.

9. Système d'ajustement selon l'une des revendications 1 à 8,
**caractérisé en ce qu'**un appareil de levage (33) du dispositif d'ajustement (12) est prévu, au moyen duquel le cadre de support (16) peut être soulevé et abaissé conjointement avec le bâti de positionnement (15) par rapport à la palette (13).

10. Système d'ajustement selon l'une des revendications 1 à 9,
**caractérisé en ce qu'**au moins une butée est prévue pour limiter le mouvement du bâti de positionnement (15) par rapport au cadre de support (16).

11. Système d'ajustement selon l'une des revendications 1 à 10,
**caractérisé en ce qu'**est prévu un appareil optique de reconnaissance d'images du dispositif d'ajustement (12), au moyen duquel la position respective du bâti de positionnement (15) et/ou de ses barres de support (14) et/ou de la pièce déposée peut être détectée.

12. Système d'ajustement selon l'une des revendications 1 à 11,
**caractérisé en ce qu'**est prévu au moins une unité de commande du dispositif d'ajustement (12), au moyen de laquelle le bâti de positionnement (15) est mobile automatiquement par rapport au cadre de support (16).

13. Système d'ajustement selon l'une des revendications 1 à 12,
**caractérisé en ce qu'**un bâti de support (42) du système d'ajustement (41), sur lequel la palette (13) peut être déposée, est associé au bâti de positionnement (15) avec les barres de support (14) et le cadre de support (16).

14. Système d'ajustement selon la revendication 13, **caractérisé en ce que** l'appareil de levage (33) destiné à soulever et à abaisser le cadre de support (16) est conçu conjointement avec le bâti de positionnement (15) par rapport au bâti de support (42).
